# EUROPEAN PATENT APPLICATION

(11) **EP 2 293 484 A1**
(43) Date of publication of application: **09.03.2011**
(21) Application number: 09765365.3
(22) Date of filing: 01.06.2009
(51) Int. Cl.: H04L 1/18

(54) **METHOD AND DEVICE FOR PROCESSING RADIO LINK CONTROL RETRANSMISSION**

(30) Priority: 16.06.2008 CN 200810067755
(71) Applicant: Huawei Technologies Co., Ltd., Longgang District, Shenzhen Guangdong 518129 (CN)
(72) Inventor: SUN, Qiang, Shenzhen Guangdong 518129 (CN)
(74) Representative: Pfenning, Meinig & Partner GbR
(86) International application number: PCT/CN2009/072071
(87) International publication number: WO 2009/152726

(57) **Abstract**

A method for processing Radio Link Control (RLC) retransmission is provided, which includes: disabling RLC retransmission function on a data link layer when an RLC sublayer adopts an acknowledged mode. An apparatus for processing RLC retransmission is further provided, which includes: a determining module, configured to determine whether an RLC sublayer adopts an acknowledged mode; and a control module, configured to disable RLC retransmission function on a data link layer when a determining result of the determining module is that the RLC sublayer adopts the acknowledged mode. Through the method and the apparatus, the RLC data retransmission function on the data link layer under the acknowledged mode in a High Speed Downlink Packet Access (HSDPA) downlink system is simplified, resource occupation by the RLC retransmission is avoided.

## Description

This application claims priority to Chinese Patent Application No. 200810067755.8, filed with the Chinese Patent Office on June 16, 2008 and entitled "METHOD AND APPARATUS FOR PROCESSING RADIO LINK CONTROL RETRANSMISSION", which is incorporated herein by reference in its entirety.

### FIELD OF THE INVENTION

The present invention relates to the field of communications technology, and in particular, to a method and an apparatus for processing Radio Link Control (RLC) retransmission.

### BACKGROUND OF THE INVENTION

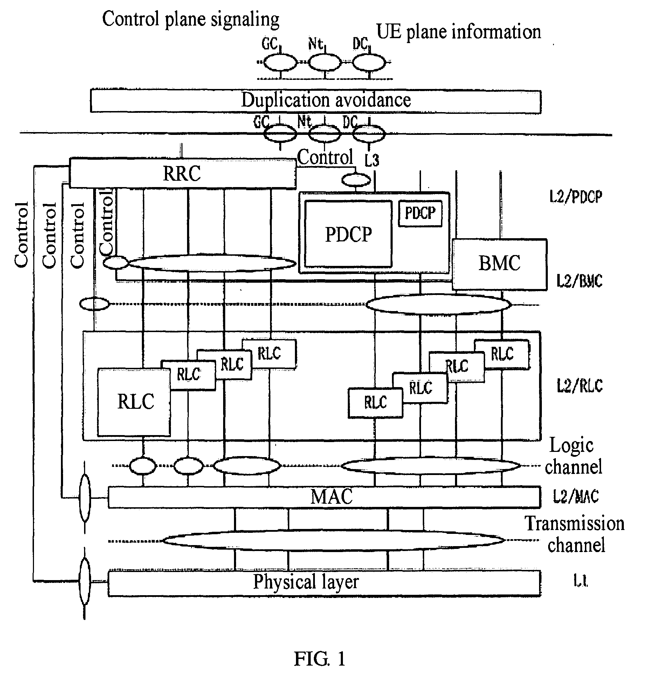

The radio interface technology is a key technology of the third generation mobile communication. FIG. 1 shows a structure of the radio interface protocol of a universal mobile telecommunications system (UMTS), which may be divided into a physical layer 1 (Layer 1), a data link layer 2 (Layer 2), and a network layer 3 (Layer 3). A data link layer includes a medium access control (MAC) sublayer, a radio link control (RLC) sublayer, a packet data convergence protocol (PDCP) sublayer, and a broadcast/multicast control (BMC) sublayer. A transmission mode of the RLC sublayer has three types: an acknowledged mode (AM), an unacknowledged mode (UM), and a transparent mode (TM). In AM transmission mode, if the data is not correctly received on the RLC sublayer of a user equipment (UE) side, the RLC sublayer of the UE side will initiate a retransmission request.

The existing retransmission mechanism causes that the Layer 2 processing is complex, and the system occupies excessive resources.

### SUMMARY OF THE INVENTION

Accordingly, embodiments of the present invention provide a method and an apparatus for processing RLC retransmission.

An embodiment of the present invention provides a method for processing RLC retransmission. The method includes: disabling a RLC retransmission function on a data link layer L2 when an RLC sublayer adopts an acknowledged mode.

An embodiment of the present invention further provides an apparatus for processing RLC retransmission, which includes an AM entity. The AM entity includes a retransmission buffer & management unit, a determining module configured to determine whether an RLC sublayer adopts an acknowledged mode, and a control module configured to disable a RLC retransmission function on a data link layer L2.

Compared with the prior art, the embodiments of the present invention simplify the data retransmission function of the L2 RLC under the AM mode in a High Speed Downlink Packet Access (HSDPA) system, avoiding that resources are occupied by the data retransmission function of the L2 RLC.

### DETAILED DESCRIPTION OF THE DRAWINGS

FIG 1 is a schematic structural view of the UMTS radio interface protocol;
FIG. 2 is a schematic diagram of an AM entity related to an embodiment of the present invention;
FIG. 3 is a schematic diagram of an AM entity according to an embodiment of the present invention;
FIG. 4 is a schematic diagram of an RLC sublayer related to an embodiment of the present invention;
FIG. 5 is a schematic diagram of an RLC sublayer according to an embodiment of the present invention;
FIG. 6 is a schematic diagram of an apparatus for processing RLC retransmission according to an embodiment of the present invention;
FIG. 7 is a schematic diagram of an apparatus for processing RLC retransmission according to another embodiment of the present invention; and
FIG. 8 is a schematic diagram of an apparatus for processing RLC retransmission according to another embodiment of the present invention.

### DETAILED DESCRIPTION OF THE EMBODIMENTS

The present invention is further described in the following with reference of the accompanying drawings and the embodiments.

### Embodiment 1

A conventional Automatic Repeat Request (ARQ) method is adopted in the Wide-band Code Division Multiple Access (WCDMA) R99/R4 release, and the retransmission function is implemented on an RLC sublayer. Because signaling and data need to be transferred between L1, L2 and L3, a large time delay is required for retransmission when data is not correctly received, and in addition, the L2 needs to process the retransmission-related signaling and buffer corresponding original data, thus causing large system overheads. A Hybrid Automatic Retransmission Request (HARQ) function is added in the WCDMA R5 release and the subsequent releases. The HARQ is a correction technology, and "hybrid" means that this technology integrates the features of Forward Error Correction (FEC) and ARQ. Therefore, the data may be directly retransmitted on the L1 through the control of the MAC layer entity (MAC-hs), improving the transmission rate and shortening the delay. However, the original RLC retransmission mechanism of the L2 is still reserved, and if the retransmission on the L1 fails, it is determined that the HSDPA data is not correctly received on the RLC of a UE side, and in such case, the RLC layer retransmission is initiated.

The method for processing RLC retransmission provided in this embodiment includes: disabling a RLC retransmission function on a data link layer L2 when an RLC sublayer adopts an acknowledged transmission (AM) mode. It should be noted that, when the RLC retransmission function is disabled on the L2, the data retransmission may be implemented on the L1 by using the HARQ function, and if the communication quality of an air interface channel is poor, the data retransmission may be implemented through HARQ transmission in multiple times on the L1. Specifically, a threshold for the number of times for HARQ retransmission may be set, and the threshold for the number of times for retransmission is adjusted according to the quality of the current air interface channel. When the quality of the current air interface channel is poor, the threshold for the number of times for retransmission may be increased, and thus the number of times for the HARQ transmission on the L1 is increased, thus solving the problem that the data HARQ retransmission fails in the case of poor air interface channel quality. The disabling the RLC sublayer retransmission function on the data link layer L2 in this embodiment prevents unnecessary retransmission data reserved in the system and unnecessary buffer space occupied in the system, and in addition, because the data retransmission can be implemented on the L1, the required delay for retransmission when the data is not correctly received is shortened.

### Embodiment 2

A method for processing RLC retransmission provided in this embodiment includes the following steps.

It is determined whether an RLC sublayer of an L2 adopts an AM transmission mode. If the RLC sublayer adopts the AM mode, during the signaling processing, the L2 does not process, i.e. ignores, the RLC data acknowledge signaling delivered from the uplink, and during the data processing, the RLC data is not buffered, i.e., buffering the RLC data is disabled. It should be noted that, the two measures both implement that the RLC retransmission function on the data link layer L2 is disabled, where the two measures refer to that the data acknowledge signaling is not processed and that the RLC data is not buffered. The two measures may be used independently or in combination. In addition, to improve the compatibility with the existing protocols, during the establishment of the services, the uplink and downlink transmission modes may be unified as the AM mode in the case that the uplink transmission or the downlink transmission uses the AM transmission mode. The method of disabling the RLC sublayer retransmission function on the data link layer L2 in this embodiment prevents unnecessary retransmission data reserved in the system and unnecessary buffer space occupied in the space, and in addition, because the data retransmission can be implemented on the L1, the required delay for retransmission when the data is not correctly received is shortened.

### Embodiment 3

In this embodiment, an AM entity model in the existing protocol is improved, which includes the following content.

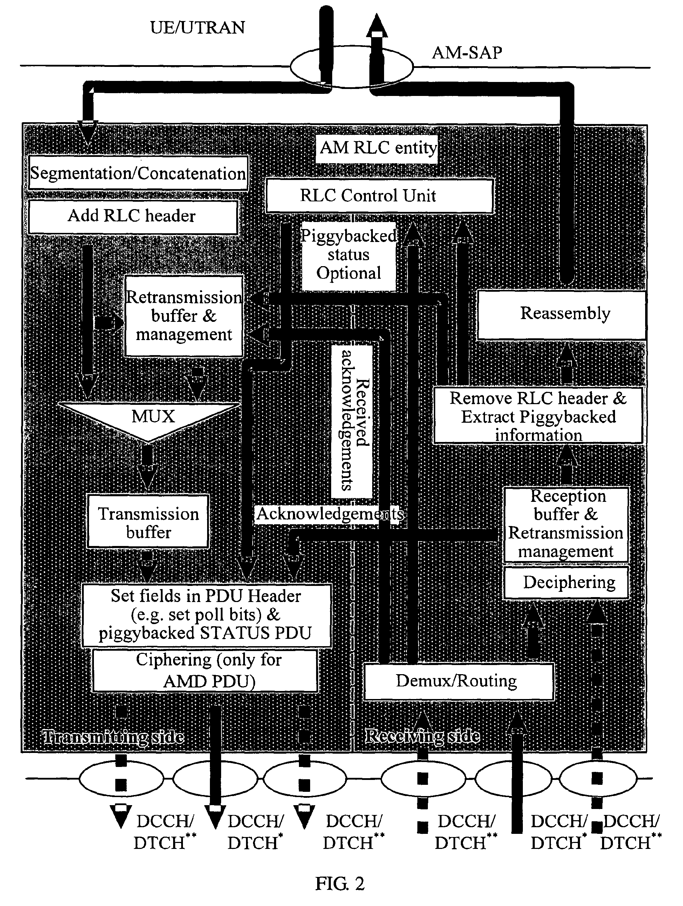

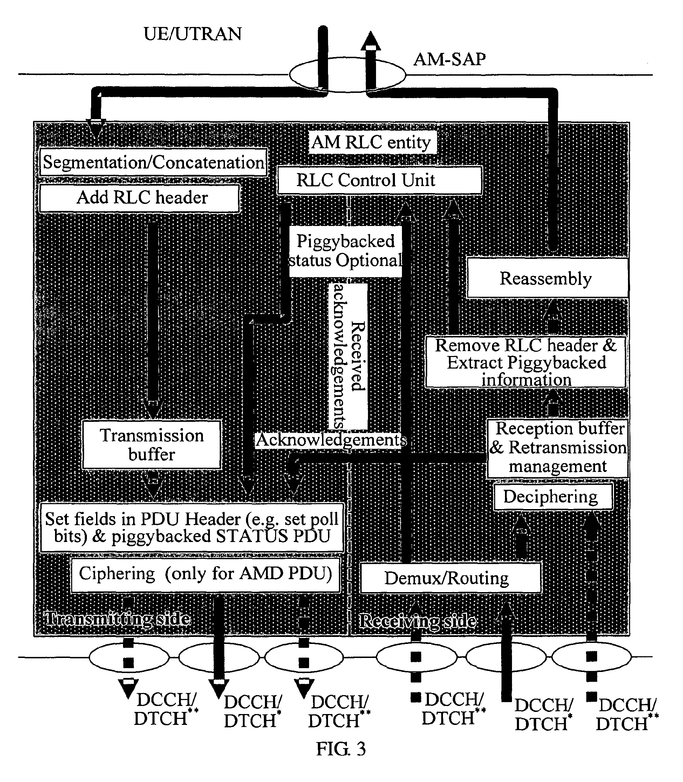

FIG. 2 illustrates the AM entity model in the current 3GPP TS 25.322 protocol, and the improved AM entity is shown in FIG. 3. In this embodiment, a UMTS Terrestrial Radio Access Network (UTRAN) side downlink retransmission buffer & management unit in the AM entity is deleted, and the corresponding retransmission information, such as the information from a Demux/Routing module and the information from a Remove RLC header & Extract Piggybacked information module, is not processed, i.e. is ignored. By deleting the retransmission buffer & management unit and not processing the corresponding confirmation information, the disabling the RLC retransmission function on the L2 may be implemented on the basis of the existing protocol. In addition, a multiplexing (MUX) unit is used as a means for implementing the RLC retransmission function, and is configured to multiplex the retransmission data and the new transmission data. When the retransmission buffer & management unit is deleted, the MUX unit may also be deleted. The disabling the RLC sublayer retransmission function on the data link layer L2 in this embodiment prevents unnecessary retransmission data reserved in the system and unnecessary buffer space occupied in the system, and in addition, because the data retransmission can be implemented on the L1, the required delay for retransmission when the data is not correctly received is shortened.

### Embodiment 4

In this embodiment, an RLC sublayer model in the existing protocol is improved, which includes the following content.

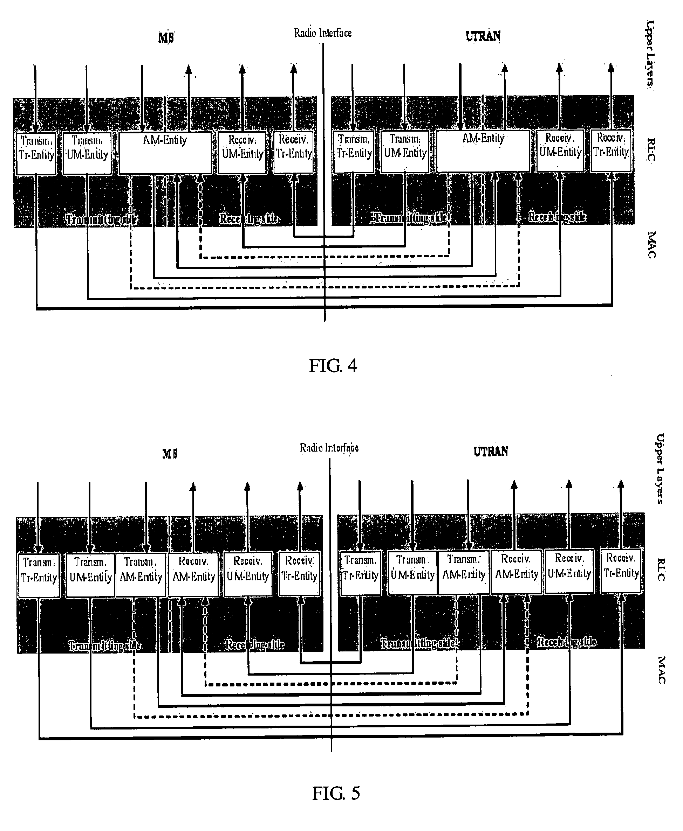

FIG. 4 is a schematic diagram of an RLC sublayer in the existing protocol. In this embodiment, uplink of the RLC sublayer is separated from downlink data of the RLC sublayer, so that the uplink and downlink data may be respectively transmitted in different modes, so that the retransmission function of the RLC sublayer of a data link layer L2 may be disabled. During the specific implementation, an original AM entity on a UTRAN side and on a terminal side in the RLC sublayer is respectively separated, which is shown in FIG. 5. For example, the AM entity may be divided into a Transm. AM-entity and a Receiv. AM-entity, and thus the uplink data streams of the AM entity can be separated from downlink data streams of the AM entity, so that the uplink data of the RLC sublayer is separated from downlink data of the RLC sublayer. Thus the uplink and downlink data transmission is not bound and uplink and downlink logical channels are not associated in the case that the transmission mode of channel link setup is the AM mode. When the uplink uses the AM mode to perform RLC transmission, the downlink may use UM mode to perform RLC transmission, and in such case, no acknowledgment is required for the RLC transmission of the downlink data. Alternatively, when the uplink uses the UM mode to perform the RLC transmission, the downlink may use the AM mode to perform the RLC transmission, and in such case, no acknowledgment is required for the RLC transmission of the uplink data. In this way, the disabling the RLC retransmission function on the L2 may be implemented on the basis of the existing protocol. The disabling the RLC sublayer retransmission function on the data link layer L2 in this embodiment prevents unnecessary retransmission data reserved in the system and unnecessary buffer space occupied in the system, and in addition, because the data retransmission can be implemented on the L1, the required delay for retransmission when the data is not correctly received is shortened.

### Embodiment 5

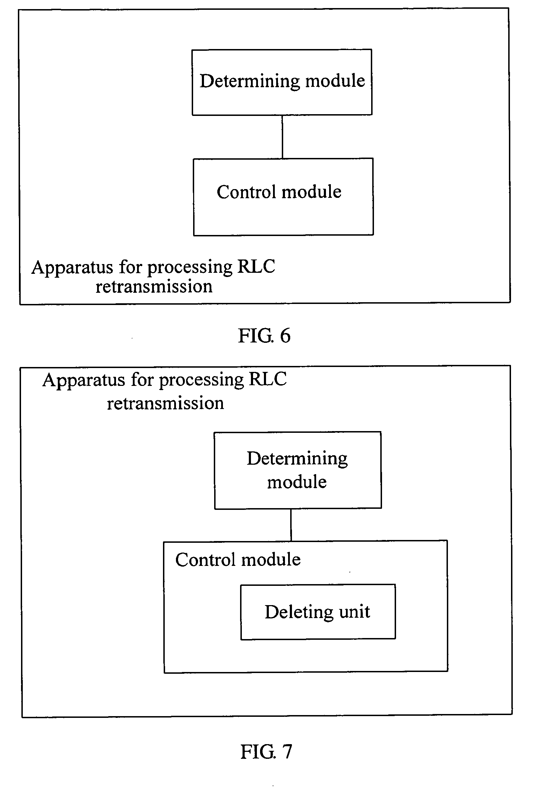

In this embodiment, an apparatus for processing RLC retransmission is provided, which is shown in FIG. 6. The apparatus includes: a determining module, configured to determine whether an RLC sublayer adopts an acknowledged mode; and a control module, configured to disable RLC retransmission function on a data link layer L2 when a determining result of the determining module is that the RLC sublayer adopts the acknowledged mode. In such case, data retransmission may be implemented on the L1 through an HARQ function. A threshold for the number of times for HARQ retransmission may be set. When the air interface channel quality is poor, the number of times for HARQ retransmission on the L1 is increased by increasing the threshold for the number of times for HARQ retransmission on the L1, thus solving the problem that the data HARQ retransmission fails in the case of air interface channel with poor quality. Through the apparatus provided in this embodiment, the disabling the RLC sublayer retransmission function on the data link layer L2 is implemented, thus preventing unnecessary retransmission data reserved in the system and unnecessary buffer space occupied in the system, and in addition, because the data retransmission can be implemented on the L1, the required delay for retransmission when the data is not correctly received is shortened significantly.

### Embodiment 6

In this embodiment, an apparatus for processing RLC retransmission is provided, which is shown in FIG. 7. The apparatus includes: a determining module, configured to determine whether an RLC sublayer adopts an acknowledged mode; and a control module, configured to disable RLC retransmission function on a data link layer L2 when a determining result of the determining module is that the RLC sublayer adopts the acknowledged mode. The control module may include a deleting unit, configured to delete a retransmission buffer & management unit in an AM entity and further configured to delete a MUX module in the AM entity. Through the apparatus provided in this embodiment, the disabling the RLC sublayer retransmission function on the data link layer L2 is implemented, thus preventing unnecessary retransmission data reserved in the system and that unnecessary buffer space occupied in the system, and in addition, because the data retransmission can be implemented on the L1, the required delay for retransmission when the data is not correctly received is shortened significantly.

### Embodiment 7

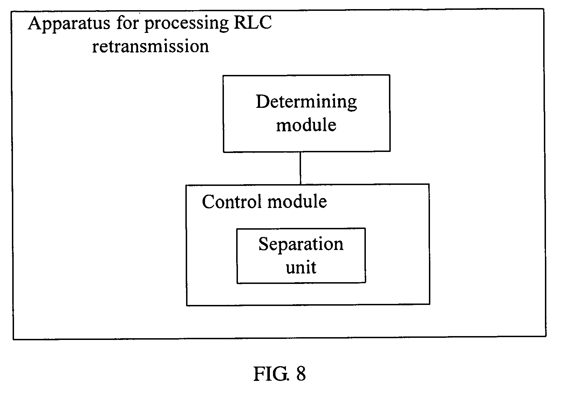

In this embodiment, an apparatus for processing RLC retransmission is provided, which is shown in FIG. 8. The apparatus includes: a determining module, configured to determine whether an RLC sublayer adopts an acknowledged mode; and a control module, configured to disable RLC retransmission function on a data link layer L2 when a determining result of the determining module is that the RLC sublayer adopts the acknowledged mode. The control module may include: a separation unit, configured to separate uplink data of the RLC sublayer from downlink data of the RLC sublayer, and in the specific implementation, the original AM entity on a UTRAN side and a terminal side in the RLC sublayer may be respectively divided into a Transm. AM-entity and a Receiv. AM-entity, and through the separation of the original AM entity, the uplink data streams of the RLC sublayer is separated from the downlink data streams of the RLC sublayer. Through the apparatus provided in this embodiment, the disabling the RLC sublayer retransmission function on the data link layer L2 is implemented, thus preventing unnecessary retransmission data reserved in the system and unnecessary buffer space occupied in the system, and in addition, because the data retransmission can be implemented on the L1, the required delay for retransmission when the data is not correctly received is shortened significantly.

The above embodiments are used to merely describe the technical solutions of the present invention, but are not intended to limit the present invention. It should be understood by persons of ordinary skill in the art that modifications or equivalent replacements can be made to the technical solutions of the present invention, and such modifications or equivalent replacements do not depart from the spirit and scope of the technical solutions of the present invention.

## Claims

1. A method for processing Radio Link Control, RLC, retransmission, **characterized by** comprising: disabling an RLC retransmission function on a data link layer when an RLC sublayer adopts an acknowledged mode.

2. The method according to claim 1, wherein the disabling the RLC retransmission function on the data link layer comprises: ignoring, by the data link layer, acknowledge signaling of the RLC data transferred in an uplink direction.

3. The method according to claim 1, wherein the disabling the RLC retransmission function on the data link layer comprises: disabling buffering, by the data link layer, the RLC data.

4. The method according to claim 1, wherein the RLC sublayer comprises an acknowledged mode, AM entity, and the disabling the RLC retransmission function on the data link layer comprises: deleting a retransmission buffer & management unit in the AM entity, so that retransmission confirmation information is not processed.

5. The method according to claim 4, further **characterized by**: deleting a multiplexing module in the AM entity.

6. The method according to claim 1, wherein the disabling the RLC retransmission function on the data link layer comprises: separating uplink data of the RLC sublayer from downlink data of the RLC sublayer.

7. The method according to claim 1, wherein data retransmission, originally implemented by the RLC retransmission function, is implemented through Hybrid Automatic Retransmission Request, HARQ on a physical layer.

8. An apparatus for processing Radio Link Control, RLC, retransmission, **characterized by** comprising:
a determining module, configured to determine whether an RLC sublayer adopts an acknowledged mode; and
a control module, configured to disable an RLC retransmission function on a data link layer when a determining result of the determining module is that the RLC sublayer adopts the acknowledged mode.

9. The apparatus according to claim 8, wherein the control module comprises a deleting unit, configured to delete a retransmission buffer & management unit in an acknowledged mode, AM, entity.

10. The apparatus according to claim 8, wherein the control module comprises a separation unit, configured to separate uplink data of the RLC sublayer from downlink data of the RLC sublayer.
